# EUROPEAN PATENT SPECIFICATION

(11) **EP 2 404 805 B1**
(45) Date of publication and mention of the grant of the patent: **30.09.2020**
(21) Application number: 10748585.6
(22) Date of filing: 01.02.2010
(51) Int. Cl.: B61D 19/02, H02P 6/08

(54) **DOOR CONTROL SYSTEM FOR RAILROAD VEHICLE**
TÜRSTEUERSYSTEM FÜR EIN SCHIENENFAHRZEUG
SYSTÈME DE COMMANDE DE PORTE POUR VÉHICULE SUR RAILS

(30) Priority: 03.03.2009 JP 2009049395
(43) Date of publication of application: 11.01.2012
(73) Proprietor: Nabtesco Corporation, Tokyo 102-0093 (JP)
(72) Inventor: NAGATA, Kazutaka, Kobe-shi Hyogo 651-2271 (JP); UNO, Hiroki, Kobe-shi Hyogo 651-2271 (JP)
(74) Representative: Cabinet Beau de Loménie
(86) International application number: PCT/JP2010/051349
(87) International publication number: WO 2010/100988

(56) References cited:
- JP-A- 6 219 310
- JP-A- 9 301 161
- JP-A- 11 180 303
- JP-A- 11 180 304
- JP-A- 2005 057 904
- JP-A- 2005 130 673
- JP-A- 2005 145 240
- JP-A- 2005 231 441
- JP-A- 2006 290 048
- JP-A- 2007 280 313
- US-A1- 2005 102 903

## Description

### Technical Field

The present invention relates to a railroad vehicle door control system for controlling the opening and closing of a door of a railroad vehicle.

### Background Art

A known door controller for controlling the opening and closing of a door of a railroad vehicle is recited in Patent Document 1.

This door controller controls the opening and closing of the door based on two input door operation instruction signals . More specifically, if one of the two door operation instruction signals is not changed to a signal state of requesting a door opening operation within a setting period after the other of the door operation instruction signals is changed to the signal state of requiring the door opening operation, it is determined that the opening operation instruction is improper and the door opening operation is not carried out.

This arrangement ensures the safety because the door does not open when the door operation instruction signals are inappropriately changed on account of noise or the like.

### Citation List

### Patent Documents

Patent Document 1
   Japanese Unexamined Patent Publication No. 2007-1346
Patent Document 2: US 2005/0102903A1

### Summary of Invention

### Technical Problem

However, the door controller of Patent Document 1 which is arranged to stop the door opening operation when the door operation instruction signals input through duplex signal lines are different from each other is disadvantageous in that the door opening operation is no longer possible after it becomes impossible to receive one of the two door operation instruction signals on account of a failure or the like. In such a case, inconveniently the passengers cannot use that door which is the target of the control. Furthermore, since the opening operation of the door, which is the target of the control, is stopped, the vehicle service is obstructed.

Patent Document II discloses a railroad vehicle door control system comprising a plurality of door controllers provided for respective doors of a railroad vehicle to control opening and closing of the doors and a communication line to which the door controllers are connected, the doors being opened or closed based on an instruction simultaneously transmitted from a driver stand to the door controllers, whereby each of the controllers includes a motor which opens or closes the associated door and a controller which is able to control the motor based on an instruction from the driver stand, whereby the controller obtains information from the other door controllers of the aforesaid plurality.

In consideration of the problem above, the present invention aims at providing a railroad vehicle door control system which can continue the opening and closing of a door while ensuring the security.

### [Solution to Problem]

To achieve the object above, a railroad vehicle door control system according to the present invention has the features included in claim 1 or the features included in claim 7.

A railroad vehicle door control system according to the first aspect of the present invention includes: a plurality of door controllers provided for respective doors of a railroad vehicle to control opening and closing of the doors and a communication line to which the door controllers are connected, the doors being opened or closed based on an instruction simultaneously transmitted from a driver stand to the door controllers, each of the door controllers including: a motor which opens or closes the associated door; and a first controller and a second controller which are able to control the motor based on an instruction from the driver stand, the second controller obtaining control information from the first controller and another door controller via the communication line while the first controller is controlling the motor, and switching the control of the motor from the control by the first controller to the control by the second controller when the control information of the first controller is different from the control information of the second controller and the control information of said another door controller.

The "control information" is information which is input from the outside and stored in a controller to allow the controller to control devices (including the motor) provided in the vehicle. In other words, the controller controls the motor based on the control information.

According to the arrangement above, when, for example, there is a failure in the first controller and the control information of the first controller becomes inappropriate, the control of the motor by the first controller having the failure is stopped. This prevents the motor from being driven based on inappropriate control information, with the result that the safety is ensured.

Furthermore, when the control information of the first controller is inappropriate, the control of the motor is immediately switched from the control by the first controller to the control by the second controller, with the result that an uninterrupted operation of the door is possible.

In addition to the above, according to the second aspect of the present invention, the railroad vehicle door control system of the first aspect is further arranged so that the first controller is arranged to be able to detect a failure in the first controller, and to stop the control of the motor and output failure information to the communication line upon detection of a failure in the first controller, and the second controller switches the control of the motor from the control by the first controller to the control by the second controller, when receiving the failure information from the first controller via the communication line.

According to this arrangement, since the first controller detects a failure therein and outputs the failure information to the communication line, the second controller is not required to detect, by analyzing information concerning the first controller, a failure that the first controller can detect by itself. The second controller can therefore detect a failure in the first controller without needing a large amount of control information transmitted from the first controller.

In addition to the above, according to the third aspect of the present invention, the railroad vehicle door control system of the first or second aspect is further arranged so that the second controller is able to detect a failure in the second controller and sends failure information to the first controller upon detection of a failure in the second controller, and the first controller outputs the failure information to the communication line when receiving the failure information from the second controller.

According to this arrangement, even if there is a failure in the second controller, the first controller can output information indicating that redundancy is no longer available to the communication line, while continuing the control of the motor. As such, it is possible to notify a host system or the like connected to the communication line that redundancy is no longer available, while the operation of the door is uninterruptedly carried out.

According to the fourth aspect of the present invention, the railroad vehicle door control system according to any one of the first to third aspects is further arranged so that each of the door controllers includes: a first output line relay provided on an output line connecting the first controller with the motor; a second output line relay provided on an output line connecting the second controller with the motor; and a feeder line relay provided on a feeder line through which power is supplied from a power source to the first controller, and the second controller opens the feeder line relay and the first output line relay and closes the second output line relay, when receiving the failure information from the first controller.

It is noted that "to open a relay" indicates that an electric current flow on an electric cable on which the relay is provided is cut off. On the other hand, "to close a relay" indicates that an electric current is allowed to flow through the relay.

According to this arrangement, even if the first controller becomes uncontrollable because, for example, a microcomputer thereof runs away, it is possible to surely separate the first controller to prevent the control of the door by the second controller from being adversely influenced.

According to the fifth aspect of the present invention, the railroad vehicle door control system according to any one of the first to fourth aspects is arranged so that the motor is provided with a first encoder outputting a detection result to the first controller and a second encoder outputting a detection result to the second controller, and each of the first controller and the second controller includes a control unit having a CPU, an information input/output electric circuit which is able to output information from the control unit to the communication line and to input information from the communication line to the control unit, and a motor output electric circuit which is used for supplying electric power to the motor.

According to this arrangement, because the components (such as the motor) which are relatively unlikely to break down are shared, the space and costs are reduced.

On the other hand, because the components which are relatively likely to break down (such as the encoder, the control unit, the information input/output electric circuit, and the motor output electric circuit) are provided in each of the controllers, redundancy is enhanced.

According to the sixth aspect of the present invention, the railroad vehicle door control system according to the fifth aspect is further arranged so that, when the first controller is controlling the motor, no power is supplied to the motor output electric circuit of the second controller.

According to the arrangement above, because no power is supplied to the motor output electric circuit which is not used for monitoring the first controller, power saving is achieved. Furthermore, since the degradation of the motor output electric circuit due to continuous power supply thereto is restrained, the occurrence of a failure therein is restrained.

According to the seventh aspect of the present invention, a railroad vehicle door control system includes: a plurality of door controllers provided for respective doors of a railroad vehicle to control opening and closing of the doors and a communication line to which the door controllers are connected, each of the door controllers comprising: a motor which opens or closes the associated door; and a first controller and a second controller which are able to control the motor based on an instruction which is simultaneously transmitted from the driver stand to the plurality of door controllers via the communication line, the second controller obtaining control information from the first controller and from other door controllers via the communication line while the first controller is controlling the motor, and switching the control of the motor from the control by the first controller to the control by the second controller based on the control information of the first controller, the control information of the second controller, and the sets of control information of said other door controllers.

According to this arrangement, the determination as to whether the control information of the first controller is appropriate is precisely made without needing any additional device.

This makes it possible to continue the opening and closing of a door while ensuring the security.

According to the eighth aspect of the present invention, the railroad vehicle door control system according to the seventh aspect is further arranged so that the second controller obtains the control information from the first controller and said other door controllers while the first controller is controlling the motor, and the control of the motor is switched from the control by the first controller to the control by the second controller if: (a) at least a half of the control information of the first controller, the control information of the second controller, and the sets of control information of said other door controllers are identical with one another, (b) the identical sets of control information are different from the control information of the first controller, and (c) the identical sets of control information are identical with the control information of the second controller.

According to this arrangement, it is possible to precisely find a case where there is a failure in the first controller but not in the second controller, by a simple comparison of the control information. Therefore the control of the motor is not switched to the control by the second controller having a failure.

### Advantageous Effects of Invention

The present invention makes it possible to continue the opening and closing of a door while ensuring the security.

### Brief Description of Drawings

Fig. 1 schematically shows a railroad vehicle having a railroad vehicle door control system according to an embodiment of the present invention.
Fig. 2 is a block diagram showing the railroad vehicle door control system of Fig. 1.
Fig. 3 is a block diagram showing the details of the door controller of Fig. 2.
Fig. 4 is a flowchart illustrating the operation of the first controller.
Fig. 5 is a first flowchart illustrating the operation of the second controller.
Fig. 6 is a second flowchart illustrating the operation of the second controller.

### Description of Embodiments

The following will describe a best mode for carrying out the present invention with reference to the figures.

### <Outline of Railroad Vehicle Having Door Control System>

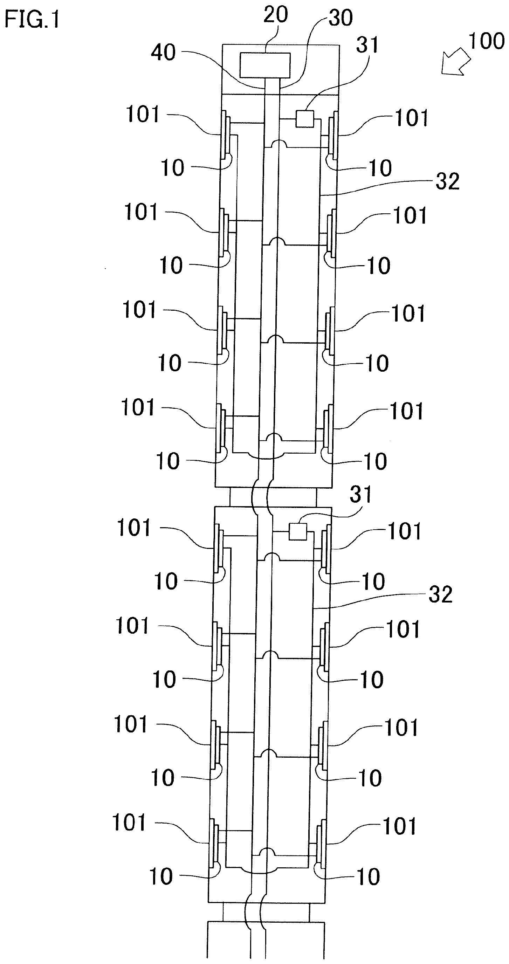

Fig. 1 schematically shows a railroad vehicle 100 which is provided with a railroad vehicle door control system according to an embodiment of the present invention.

As shown in Fig. 1, each railroad vehicle 100 has eight doors 101 on its sides. Each door 101 is provided with a door controller 10 for opening and closing that door 101. Furthermore, at the leading end of the first vehicle, a train information controller 20 (driver stand) is provided. From this train information controller 20, a command communication line 30 extends to pass through all vehicles. The command communication line 30 is, for example, an RS485 serial communication line. The command communication lines 30 is branched into lines in each vehicle, and a communications terminal 31 is provided at the leading end of each branched communication line. From the communications terminal 31, a local communication line 32 extends. This local communication line 32 is branched at eight parts. The branched eight communication lines are connected to eight door controllers 10 in the vehicle, respectively. The local communication line 32 is, in the same manner as the command communication line 30, an RS485 serial communication line, for example.

In addition to the above, from the train information controller 20, a signal line 40 extends to pass through all vehicles. This signal line 40 is branched at eight parts in each vehicle, and the eight branched signal lines are connected to the respective door controllers 10. Although there are a plurality of signal lines 40, Fig. 1 shows only one signal line and omits the other signal lines.

The driver can transmit various kinds of information as below to the door controller 10, by operating the train information controller 20.

More specifically, by the operation of the train information controller 20, information such as (1) an opening instruction to move a door 101 in a closing direction, (2) a closing instruction to move a door 101 in an opening direction, and (3) a re-opening-closing instruction, which causes only a door 101 which is not fully closed to conduct the opening and closing operations again is transmitted to all door controllers 10 via the command communication line 30, the communications terminals 31, and the local communication lines 32.

It is noted that the devices (train information controller 20, communications terminals 31, and door controllers 10) connected to the command communication line 30 and the local communication lines 32 are arranged to be able to communicate with one another in a so-called broadcasting manner. Information transmitted from one of the devices via the communication lines above is supplemented by information specifying the sender.

In addition to the above, by the operation of the train information controller 20, signals such as (1) an open-enabling signal which enables the door 101 to perform the opening operation, (2) a re-opening-closing signal which allows the door 101 to perform the opening and closing operations again when the door 101 is not fully closed, and (3) a simultaneous unlocking signal which allows the door 101 to be manually opened in an emergency are transmitted to all door controllers 10 via the signal lines 40.

These signals are contact signals which are turned on (i.e. a predetermined voltage is generated on a signal line 40 corresponding to the signal) when the door 101 is allowed to perform the opening operation. When the signal is turned off, the opening operation of the door 101 is prohibited.

Furthermore, through one of the signal lines 40, a 5K signal is automatically transmitted from the train information controller 20 to indicate that the traveling speed of the railroad vehicle 100 has reached a predetermined speed (e.g. 5km/h). This 5K signal is a contact signal which is turned on when the traveling speed is 5km/h or lower (i.e. when a predetermined voltage is generated on the signal line 40 for the 5K signal), and is turned off when the traveling speed is higher than 5km/h (i.e. when no predetermined voltage is generated on the signal line 40 for the 5K signal). When the 5K signal is turned off, the opening operation of the door 101 is prohibited.

The door controller 10 controls the opening and closing of the door based on information such as (1) information from the local communication line 32, (2) a contact signal from the signal line 40, (3) a detection result from a detection unit which detects the state of the door 101, and (4) a detection result from a detection unit which detects the driving state of a motor 50.

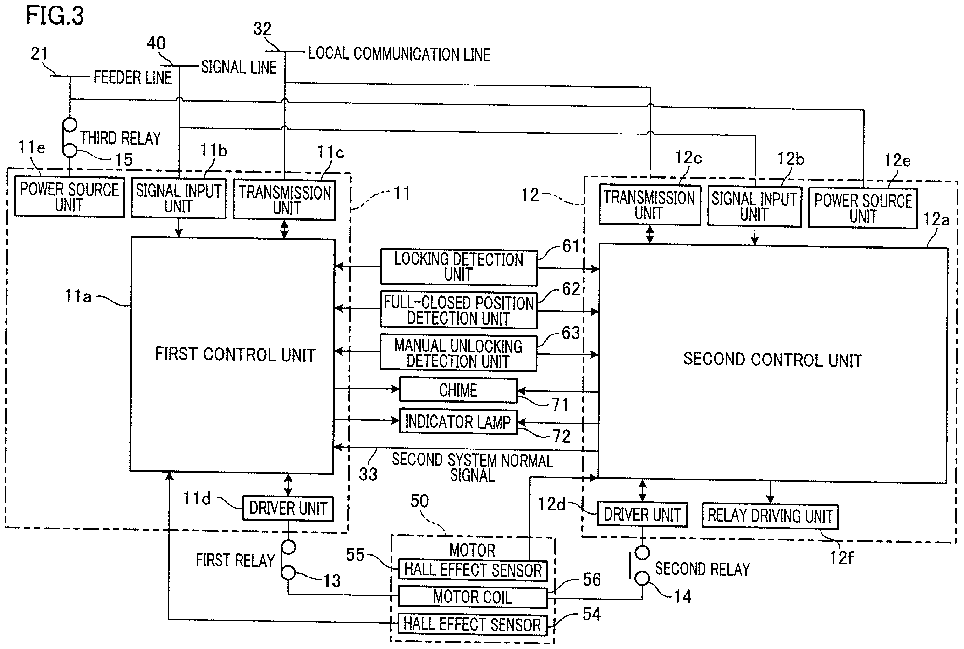

Examples of the detection unit in (3) which detects the state of the door 101 include (a) a limit switch which is provided on a locking unit which locks the door 101 at the full-closed position to detect whether the locking unit is in the locking state (i.e. a locking detection unit 61 shown in Fig. 3), (b) a limit switch detecting whether the door 101 is in the full-closed position (i.e. a full-closed position detection unit 62 shown in Fig. 3), and (c) a limit switch detecting whether the locking of the door 101 can be manually unlocked (i.e. a manual unlocking detection unit 63 shown in Fig. 3).

An example of the detection unit in (4) detecting the driving state of the motor 50 is an encoder (using Hall effect sensors 54 and 55 shown in Fig. 3) that detects the rotation information of the motor 50.

As described above, the railroad vehicle door control system of the present embodiment has the eight door controllers 10 and the local communication lines 32 connecting these door controllers 10, and the doors 101 are opened and closed based on the information which is transmitted at once from the train information controller 20 through the local communication lines 32.

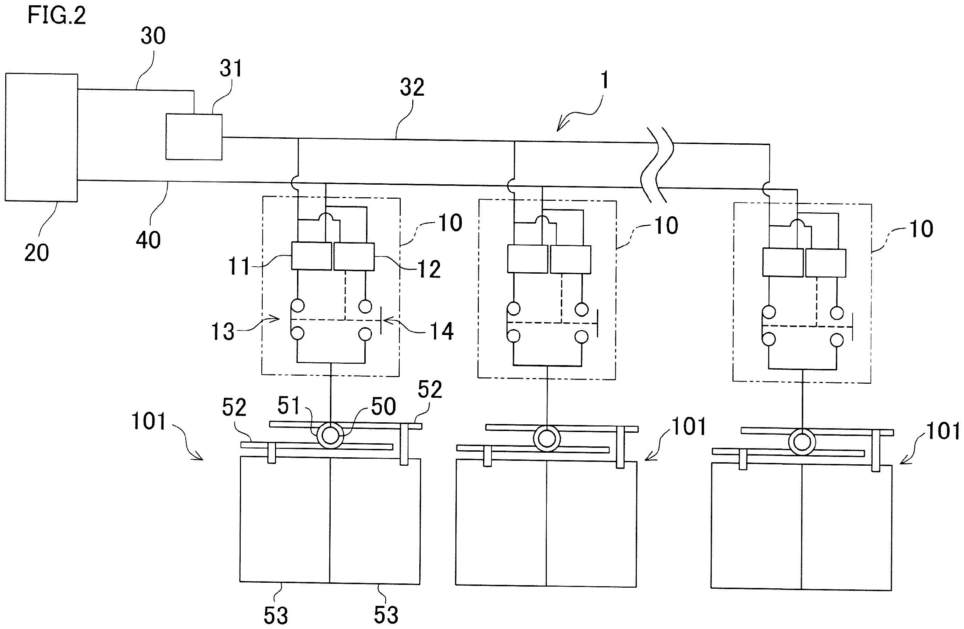

Fig. 2 is a block diagram showing the railroad vehicle door control system 1 of Fig. 1. It is noted that, since the eight door controllers 10 and doors 101 connected through the local communication lines 32 are identically constructed, the following will only describe the structure of one door controller 10 and the structure of one door 101, and the descriptions of the remaining door controllers 10 and doors 101 will be omitted.

The door 101 is a double door opened and closed with a rack and pinion mechanism, and includes a gear 51 attached to the driving shaft of the motor 50, a pair of upper and lower racks 52 arranged to engage with the gear 51, and a pair of door leaves 53 hung from the pair of racks 52 via hangers. As the motor 50 is driven forward or backward, the door 101 is opened or closed.

The door controller 10 includes two controllers (first controller 11 and second controller 12) connected to the local communication line 32. These two controllers 11 and 12 are connected to the motor 50 via relays (first relay 13 and second relay 14), respectively, and each controller can control the motor 50 when the relay is closed (i.e., when the controller is electrically connected to the motor 50).

The two relays 13 and 14 are connected to the second controller 12 and are opened or closed based on an instruction from the second controller 12.

The two controllers 11 and 12 are connected to the local communication line 32 and the signal line 40 and are arranged to control the motor 50 based on information, signals or the like input through the local communication line 32 and the signal line 40. That is to say, when the two controllers 11 and 12 operate normally (i.e. operate without failure), the controllers 11 and 12 operate in the same way (i.e. produce the same outputs to the outside) in response to the same input from the local communication line 32, the signal line 40, or the like. Based on the output of the controller connected to the closed relay (first relay 13or second relay 14), the motor 50 is driven. In the present embodiment, normally the first relay 13 is closed whereas the second relay 14 is opened, and hence the motor 50 is controlled mainly by the first controller 11.

### <Details of Door Controller 10>

Fig. 3 is a block diagram showing the details of the door controller of Fig. 2.

Each of the first controller 11 and the second controller 12 of the door controller 10 is micro-control-based and includes a control unit 11a, 12a having a CPU which operates based on a predetermined program and a RAM (Random Access Memory) which stores the predetermined program, a signal input unit 11b, 12b by which a signal from the signal line 40 is input to the control unit 11a, 12a, a transmission unit 11c, 12c which is an interface with the local communication line 32 for data communications (data transmissions), a driver unit 11d, 12d constituted by a motor drive circuit for supplying a driving power to the motor 50, and a power source unit 11e, 12e which converts the power (voltage) supplied from a feeder line 21 to generate voltages to be supplied to the respective units.

The transmission unit 11c, 12c receives instruction information transmitted (broadcasted) from the train information controller 20 to the local communication line 32 and inputs the information to the control unit 11a, 12a.

The motor 50 is a brushless motor which electrically switches the direction of the current flowing into a motor coil 56, without using a commutator. The rotational direction and the speed of the motor are controlled by the driver unit 11d, 12d. The motor 50 is provided with two Hall effect sensors for detecting the information regarding the rotation of the motor 50. An output of one Hall effect sensor 54 is supplied to the control unit 11a (hereinafter, first control unit 11a) of the first controller 11, whereas an output of the other Hall effect sensor 55 is supplied to the control unit 12a (hereinafter, second control unit 12a) of the second controller 12.

In addition to the above, to both of the control units 11a and 12a, outputs of the above-described detection units detecting the state of the door 101 (i.e., outputs of (a) the locking detection unit 61, (b) the full-closed position detection unit 62, and (c) the manual unlocking detection unit 63) are supplied.

In addition to the above, the vehicle is provided with components such as a chime 71 and an indicator lamp 72 for notifying the opening or closing operation of the door 101. The chime 71 and the indicator lamp 72 are connected to both of the control units 11a and 12a and are controllable from both of these control units 11a and 12a.

The first controller 11 is different from the second controller 12 in the following points.

### (1) Feeding Structure

The power source unit 11e of the first controller 11 is connected, via the third relay 15, to the feeder line 21 by which an electric power is supplied to each vehicle. For this reason, when the third relay 15 is open, no electric power is supplied to the power source unit 11e and hence no electric power is supplied to the units of the first controller 11.

In the meanwhile, the power source unit 12e of the second controller 12 is always connected to the feeder line 21.

### (2) Relay Driving Unit

The second controller 12 further includes a relay driving unit 12f constituted by relay drive circuits for driving the first relay 13, the second relay 14, and the third relay 15.

The relay driving unit 12f switches the relays 13, 14, and 15 between, based on an instruction from the second control unit 12a, a first state in which the first relay 13 and the third relay 15 are closed whereas the second relay 14 is open and a second state in which the first relay 13 and the third relay 15 are open whereas the second relay 14 is closed.

### (3) Second System Normal Signal

The first control unit 11a of the first controller 11 has a self failure detection function of detecting a failure of the first controller 11 and a failure of an encoder having a Hall effect sensor 54, based on information input to the first control unit 11a.

In a similar manner, the second control unit 12a of the second controller 12 has a self failure detection function of detecting a failure of the second controller 12 and a failure of an encoder having a Hall effect sensor 55, based on information input to the second control unit 12a.

With this function, the second controller 12 always outputs a signal (second system normal signal) indicating that the second controller 12 is in a normal state to the first control unit 11a of the first controller 11, when there is no failure occurring in the second controller 12 (including a Hall effect sensor 55).

It is noted that the normal signal is output from the second control unit 12a to the first control unit 11a via a path 33 which is different from the local communication line 32.

Now, the operations of the first controller 11 and the second controller 12 will be described.

### <Operation of First Controller 11>

First, the operation of the first controller 11 will be described. It is noted that the later-described operation of the second controller 12 is carried out simultaneously with the operation of the first controller 11.

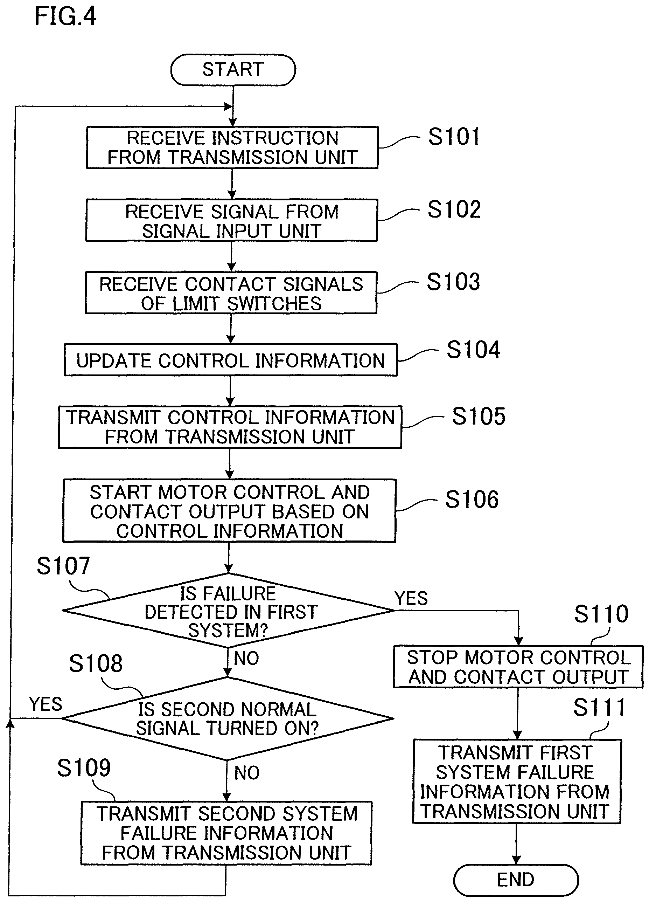

Fig. 4 is a flowchart illustrating the operation of the first controller.

As shown in Fig. 4, when opening instruction information or closing instruction information (opening/closing instruction information) is transmitted (broadcasted) from the train information controller 20 to the local communication line 32, the transmission unit 11c receives the opening/closing instruction information and this opening/closing instruction information is input from the transmission unit 11c to the first control unit 11a (Step 101).

The first control unit 11a monitors an input from the transmission unit 11c. When the opening/closing instruction information is transmitted from the transmission unit 11c, the first control unit 11a receives a signal from the signal input unit 11b (Step 102). That is to say, the signal input unit 11b inputs, to the first control unit 11a, information indicating whether contact signals from the signal lines 40 (e.g. open-enabling signal, re-opening-closing signal, simultaneous unlocking instruction signal, and 5K signal) is ON or OFF.

In addition to the above, the first control unit 11a receives contact signals indicating detection results of the detection units detecting the states of the door 101, such as the locking detection unit 61, the full-closed position detection unit 62, and the manual unlocking detection unit 63 (Step 103).

The first control unit 11a updates control information stored in a memory (such as a RAM), based on the information obtained in Step 101, 102, and 103 (Step 104).

The "control information" is information which is input from the outside and stored in the controller to allow the controller to control the components (such as the motor 50, chime 71, and indicator lamp 72) of the vehicle, and includes (1) opening/closing control information and (2) control parameter information.

### (1) Opening/Closing Control Information

The "opening/closing control information" indicates how the door 101 will operate (e.g. , opening operation and closing operation), and is updated based on the later-described control parameter information.

### (2) Control Parameter Information

The "control parameter information" is information which includes (a) transmitted instruction recognition information indicating an instruction of door opening or closing transmitted from the train information controller 20, (b) opening allowance information indicating whether the opening operation of the door is allowed, (c) and detection information indicating results of detection by the detection units of the vehicle.
(a) The transmitted instruction recognition information is updated based on information input from the transmission unit 11c.
(b) The opening allowance information is updated based on information input from the signal input unit 11b.
(c) The detection information is updated based on contact signals input from various limit switches (the locking detection unit 61, the full-closed position detection unit 62, the manual unlocking detection unit 63, or the like).

The updated control information is transmitted to the local communication line 32 via the transmission unit 11c (Step 105). In other words, the control information of the first controller 11 is transmitted to the second controller 12 and all door controllers 10 in the vehicle. It is noted that this control information is transmitted with its ID information. This "ID information" distinguishes the indicated door controller 10 from other door controllers 10 in the vehicle (e.g., "door No.1" and "door No.2").

In addition to the above, the first control unit 11a starts the opening or closing operation of the door 101, i.e. , starts to drive the motor 50, based on the updated control information of the first control unit 11a. At the same time, contact output to the indicator lamp 72, the chime 71 or the like is started (Step 106).

After the start of the drive of the motor 50, a determination is made as to whether there is a failure in the first controller 11 and in a control system (hereinafter, first system) which is connected to the first controller 11 and constituted by components such as a predetermined detection unit (Hall effect sensor 54) (Step 107). The determination is made as described below.
(1) While the motor 50 is being driven after the drive of the motor 50 is started in Step 106, information regarding the rotation of the motor 50 is fed back from the Hall effect sensor 54 to the first control unit 11a. If this rotation information (e.g., the rotation number) is different from the rotation state with which the first control unit 11a intends to rotate the motor 50, it is determined that the first system has a failure.
(2) The driver unit 11d is provided with a current sensor, and it is determined that there is a failure in the driver unit 11d, i.e. in the first system, when the current sensor detects an over-current.

In addition to the above, a failure in the first system may be detected based on a result of detection by another failure detection unit.

For example, it is determined that a failure exists in the first system when a problem in the RAM of the first control unit 11a is detectable and such a failure in the RAM is detected.

When it is determined that there is a failure in the first system as above (Step 107: YES), the first control unit 11a stops the drive of the motor 50 and also stops the contact output to the chime 71, the indicator lamp 72, or the like (Step 110) .

The first control unit 11a then transmits first system failure information to the local communication line 32 via the transmission unit 11c. This first system failure information indicates that there is a failure in the first system (Step 111).

If no failure is detected in the first system (Step 107: NO), the first control unit 11a determines whether the second system normal signal from the second control unit 12a is in the ON state, while continuing the control of the motor 50 and the contact output (Step 108).

If the second system normal signal is in the ON state (Step 108: YES), the process returns to Step 101 and a new instruction from the transmission unit 11c is waited for.

On the other hand, if the second system normal signal is in the OFF state (Step 108: NO), the first control unit 11a transmits second system failure information, which indicates that there is a failure in the second system, to the local communication line 32 via the transmission unit 11c (Step 109) . Thereafter, the process returns to Step 101 and a new instruction from the transmission unit 11c is waited for.

### <Operation of Second Controller 12>

Now, the operation of the second controller 12 will be described.

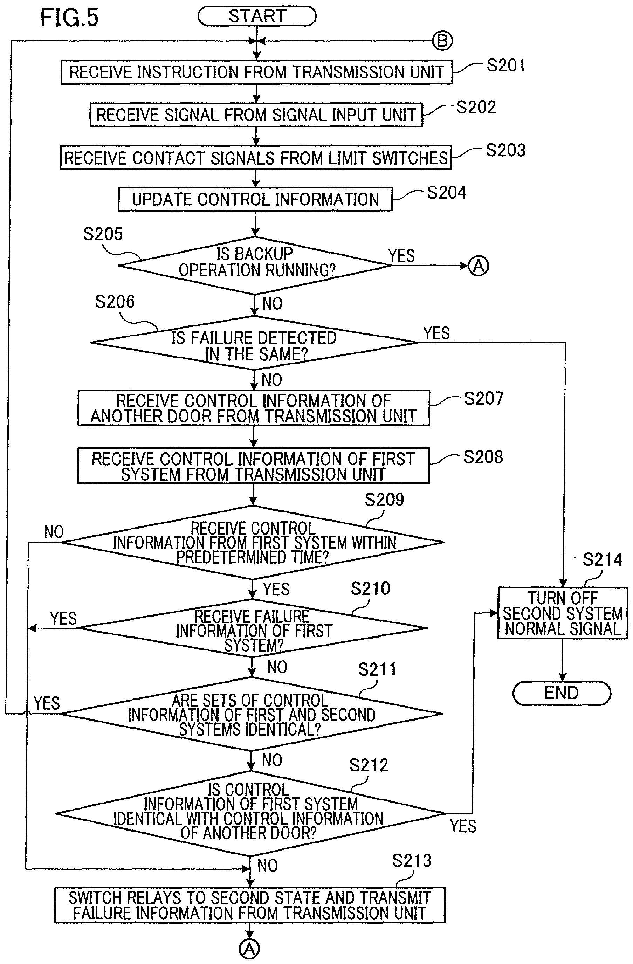

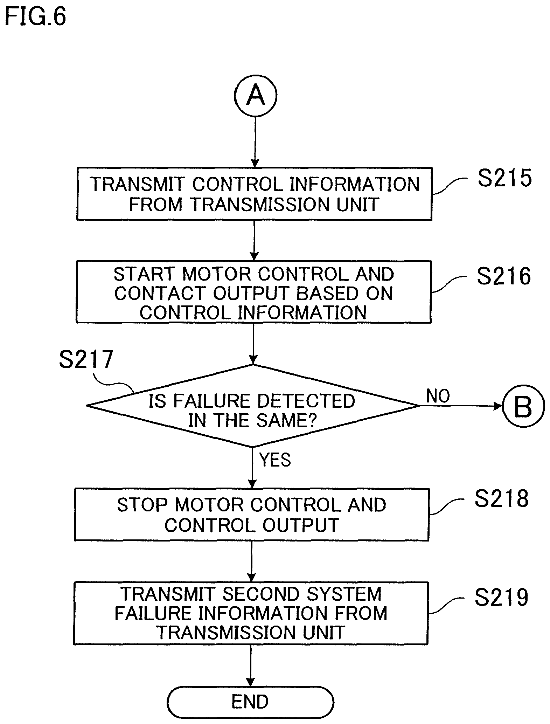

Fig. 5 and Fig. 6 are flowcharts illustrating the operation of the second controller.

Steps 201 to 204 will not be detailed below because they are identical with Steps 101 to 104 of the operation of the first controller 11 (see Fig. 4).

After the control information stored in the memory of the second control unit 12a is updated in Step 204, whether a backup operation is running is determined (Step 205).

When the backup operation is running, the power supply to the motor 50, the chime 71, the indicator lamp 72, or the like is being carried out from the second controller 12. Whether the backup operation is running is determined based on the states of the first relay 13 and the second relay 14. More specifically, it is determined that the backup operation is running, when the first relay 13 is open whereas the second relay 14 is closed.

### If Backup Operation Is Not Running (Step 205: NO)

If the backup operation is not running (Step 205: NO), a determination is made as to whether there is a failure in the second controller 12 and in the control system (hereinafter, second system) which is connected to the second controller 12 and constituted by components such as a predetermined detection unit (Hall effect sensor 55) (Step 206). This determination is made in the following manner .
(1) When the motor 50 is driving, the rotation information of the motor 50 is fed back from the Hall effect sensor 55 to the second control unit 12a. If a failure is detected in the Hall effect sensor 55 because, for example, rotation pulses from that Hall effect sensor 55 cannot be received, it is determined that there is a failure in the second system.
(2) A current sensor is provided in the driver unit 12d, and it is determined that there is a failure in the driver unit 12d, i.e. there is a failure in the second system, when the current sensor detects an over-current.

Not limited to this, whether there is a failure in the second system may be determined based on a result of detection by another failure detection unit.

When it is determined that there is a failure in the second system as above (Step 206: YES), the second control unit 12a turns OFF the second system normal signal supplied to the first control unit 11a (Step 214).

When no failure is detected in the second system (Step 206: NO), control information of another door (control information transmitted from another door controller 10) is received from the transmission unit 12c (Step 207).

Furthermore, control information of the first system (i.e., control information transmitted from the first controller 11) is received from the transmission unit 12c (Step 208).

If the control information is not transmitted from the first controller 11 in Step 208 and a predetermined period passes without the control information being received (Step 209: NO), it is determined that there is a failure in the first system, and the relay driving unit 12f switches the relays 13, 14, and 15 to the second state (i.e. the first relay 13 and the third relay 15 are opened whereas the second relay 14 is closed) (Step 213). As a result, the control of the motor 50 is switched from the control by the first controller 11 to the control by the second controller 12. The second control unit 12a transmits first system failure information indicating that there is a failure in the first system to the local communication line 32 via the transmission unit 12c (Step 213).

If the control information is received from the first controller 11 within the predetermined period (Step 209: YES), whether failure information (see Step 111 in Fig. 4) of the first system has been transmitted from the first controller 11 is determined (Step 210).

If the second control unit 12a has received the failure information of the first system via the transmission unit 12c (Step 210: YES), the second control unit 12a causes the relay driving unit 12f to switch the relays 13, 14, and 15 to the second state (i.e., the first relay 13 and the third relay are opened whereas the second relay 14 is closed), and transmits the first system failure information to the local communication line 32 via the transmission unit 12c (Step 213).

If the failure information of the first system has not been transmitted from the first controller 11 (Step 210: NO), a determination is made as to whether the control information of the first controller 11 (i.e. the control information of the first system) received in Step 208 is identical with the control information of the second controller 12 (i.e. the control information of the second system) (Step 211). More specifically, a determination is made as to whether (1) opening/closing control information and (2) control parameter information ((a) transmitted instruction recognition information, (b) opening allowance information, and (c)detection information) are identical with each other between the first system and the second system.

If the first system and the second system share the same control information (Step 211: YES), the process returns to Step 201 and a new instruction from the transmission unit 11c is waited for.

On the other hand, if the first system and the second system do not share the same control information (Step 211: NO), a determination is made as to whether the control information of the first system is identical with control information transmitted from another door controller 10 (Step 212).

In the present embodiment, the second control unit 12a compares the control information of the first system with control information transmitted from one of the remaining seven door controllers 10 which are on the same local communication line 32 as the door controller 10 having that second control unit 12a.

More specifically, provided that a door controller 10-1, a door controller 10-2, ..., and a door controller 10-8 are provided on the local communication line 32 in this order as the door controller 10-1 is the closest to the communications terminal 31, the second control unit of the door controller 10-1 compares the control information of the first system of the door controller 10-1 with the control information of the door controller 10-2.

In similar manners, the second control unit of each of the door controllers 10-2, 10-3, ..., and 10-7 compares the control information of the first system of the associated door controller with the control information of the door controller 10-3, 10-4, ..., or 10-8. The second control unit of the door controller 10-8 compares the control information of the first system of that door controller 10-8 with the control information of the door controller 10-1.

In this Step, being similar to Step 211, a determination is made as to whether (1) opening/closing control information and (2) control parameter information ((a) transmitted instruction recognition information, (b) opening allowance information, and (c)detection information) are identical.

When the control information of the first system is identical with the control information of another door controller 10 (Step 212: YES), it is determined that there is a failure in the second system and the second system normal signal is turned OFF (Step 214). That is to say, because the control information of the first system is identical with the control information of another door controller 10 and only control information of the second system is different from them, it is determined that there is a failure in the second system.

When the control information of the first system is not identical with control information of any door controller 10 (Step 212: NO), it is determined that the first system has a failure, and the relay driving unit 12f switches the relays 13, 14, and 15 to the second state (i.e. the first relay 13 and the third relay are opened whereas the second relay 14 is closed), and the first system failure information is transmitted to the local communication line 32 via the transmission unit 12c (Step 213) . In other words, because the control information of the first system is different from all of the control information of the other door controllers 10 and the control information of the second control unit 12a, it is determined that there is a failure in the first system.

After the relays 13, 14, and 15 are switched to the second state in Step 213 and the first system failure information is transmitted to the local communication line 32 via the transmission unit 12c, as shown in Fig. 6, the second control unit 12a transmits, in the same manner as Step 105, updated control information of the second control unit 12a to the local communication line 32 via the transmission unit 12c (Step 215) .

The second control unit 12a starts the opening/closing operation of the door 101, i.e. the driving of the motor 50, based on the updated control information of the second control unit 12a. At the same time, the contact output to the components such as the indicator lamp 72 and the chime 71 is started (Step 216).

After the driving of the motor 50 is started, a determination is made as to whether there is a failure in the second controller 12 and the control system connected thereto and constituted by components such as a predetermined detection unit (Hall effect sensor 55) (Step 217). The determination is made, in the same manner as Step 107 of the first controller 11, based on factors such as (1) a result of detection as to whether the rotation information fed back from the Hall effect sensor 55 to the second control unit 12a is matched with the rotation state with which the second control unit 12a intends to rotate the motor 50, and (2) a result of over-current in the current sensor provided in the driver unit 12d.

Not limited to the above, whether there is a failure in the second system may be determined based on a result of detection by another failure detection unit.

For example, whether there is a failure in the second system may be determined such that the transmission unit 12c receives control information of another door controller 10 and the determination is made based on a comparison between the received control information and the control information of that system (second system).

If it is determined that there is a failure in the second system as above (Step 217: YES), the second control unit 12a stops the driving of the motor 50 and stops the contact output to the components such as the chime 71 and the indicator lamp 72 (Step 218). The second control unit 12a then transmits second system failure information indicating that there is a failure in the second system to the local communication line 32 via the transmission unit 12c (Step 219).

On the other hand, if no failure is detected in the second system (Step 217: NO), the second control unit 12a returns to Step 201 and waits for a new instruction from the transmission unit 12c, while continuing the control of the motor 50 and the contact output.

### If Backup Operation Is Running (Step 205: YES)

If the backup operation is running (Step 205: YES), the second control unit 12a operates in accordance with Step 215 to Step 219 shown in Fig. 6. It is noted that Step 215 to Step 219 have already been described as posterior steps of Step 213 and hence the descriptions thereof are omitted.

### <Effects of Present Embodiment>

As described above, the railroad vehicle door control system 1 according to the present embodiment exerts the following effects.

### (1)

The railroad vehicle door control system 1 is a system which has door controllers 10 provided for respective doors 101 of a railroad vehicle 100 to control the opening and closing operations of the doors 101 and a local communication line 32 connected to the door controllers 10, and in the system the doors 101 are opened or closed based on an instruction which is transmitted at once to the door controllers 10 from a train information controller 20 at a driver stand via the command communication line 30 and the signal line 40.

Each of the door controllers 10 includes a motor 50 for opening and closing the door 101 and first and second controllers 11 and 12 which are capable of controlling the motor 50 based on an instruction from the train information controller 20.

While the first controller 11 is controlling the motor 50 (i.e., when the first relay 13 is closed and the second relay 14 is open), the second controller 12 obtains control information from the first controller 11 and another door controller 10 via the local communication line 32. If the control information of the first controller 11 is identical with neither the control information of that controller (second controller 12) nor the control information of the door controller 10, the control of the motor 50 is switched from the control by the first controller 11 to the control by the second controller 12 (i.e., the first relay 13 is opened whereas the second relay 14 is closed).

According to this arrangement, when, for example, a failure occurs in the first controller 11 and the control information of this first controller 11 becomes inappropriate, the control of the motor 50 by this defected first controller 11 is stopped. This prevents the motor 50 from being driven based on inappropriate control information, with the result that the safety is ensured.

Furthermore, when the control information of the first controller 11 is inappropriate, the control of the motor 50 is switched from the control by the first controller 11 to the control by the second controller 12. It is therefore unnecessary for a long time to stop the operation of the door 101 which is the target of control. For this reason, an uninterrupted operation of the door 101 is possible.

In addition to the above, since each door controller 10 individually carries out failure diagnosis and switching of control based on decentralized control, influences of the reliability of communication lines connecting the host system and vehicles are less conspicuous as compared to the cases where the processes are carried out through a host system such as the train information controller 20.

In the present embodiment, opening/closing control information and control parameter information (transmitted instruction recognition information, opening allowance information, and detection information) are used as control information for comparisons among the first system, the second system, and another door controller. This arrangement, however, is not prerequisite. For example, only the transmitted instruction recognition information and the opening allowance information are compared among the first system, the second system, and another door.

When the control information of the second system is not matched with the control information of another door controller, the control of the motor 50 may not be switched from the control by the first controller 11 to the control by the second controller 12. According to this arrangement, when the second system is likely to have a failure, the switching of the second controller 12 is not carried out.

### (2)

The first controller 11 is arranged to be able to detect a failure in the same (first controller 11), and upon detection of a failure in the same, stop the control of the motor 50 and output failure information to the local communication line 32.

When obtaining the failure information of the first controller 11 via the local communication line 32, the second controller 12 switches the control of the motor 50 from the control by the first controller 11 to the control by the second controller 12.

According to the arrangement above, the first controller 11 detects a failure therein and outputs failure information to the local communication line 32. For this reason, as to a failure that the first controller 11 can detect by itself, the second controller 12 is not required to determine the existence of such a failure by analyzing information concerning the first controller 11. Therefore, required as the control information output from the first controller 11 to the local communication line 32 is only information by which the second controller 12 detects a failure that the first controller 11 cannot detect. This allows the second controller 12 to detect a failure in the first controller 11, without needing a large amount of control information transmitted from the first controller 11.

### (3)

The second controller 12 can detect a failure in the same. When detecting a failure therein, the second controller 12 sends failure information to the first controller 11.

When receiving the failure information from the second controller 12, the first controller 11 outputs the failure information to the local communication line 32.

According to this arrangement, even when there is a failure in the second controller 12, the first controller 11 continues the control of the motor 50 and notifies the train information controller 20 via communications terminal 31 that redundancy is no longer available.

### (4)

The door controller 10 includes a first relay 13 (first output line relay) on an output line from the first controller 11 to the motor 50, a second relay 14 (second output line relay) on an output line from the second controller 12 to the motor 50, and a third relay 15 (feeder line relay) which is on the feeder line 21 provided for supplying power from the power source to the first controller 11.

When receiving the failure information from the first controller 11, the second controller 12 opens the first relay 13 and the third relay 15 and closes the second relay 14.

It is noted that, when failure information is not output from the first controller 11, the first relay 13 and the third relay 15 are closed whereas the second relay 14 is open.

According to the arrangement above, even if the first controller 11 runs away, the first controller 11 is certainly separated in order to prevent the second controller 12 from being adversely influenced.

### (5)

The motor 50 is provided with a Hall effect sensor 54 (first encoder) which outputs a detection result to the first controller 11 and a Hall effect sensor 55 (second encoder) which outputs a detection result to the second controller 12.

Each of the first controller 11 and the second controller 12 has a control unit 11a, 12a having a CPU, a signal input unit 11b, 12b (signal input electric circuit) constituted by an electric circuit which inputs a signal transmitted from the train information controller 20 via the signal line 40 to the control unit 11a, 12a, a transmission unit 11c, 12c (information input/output electric circuit) constituted by an electric circuit which can output information from the control unit 11a, 12a to the local communication line 32 and can input the information from the local communication line 32 to the control unit 11a, 12a, and a driver unit 11d, 12d (motor output electric circuit) which is constituted by an electric circuit and supplies electric power to the motor 50.

According to this arrangement, the components which are relatively unlikely to break down (i.e. the motor 50, the locking detection unit 61, the full-closed position detection unit 62, the manual unlocking detection unit 63, the chime 71, and the indicator lamp 72) are shared between the controllers to reduce the required space and costs.

On the other hand, components which are relatively likely to break down (the Hall effect sensors 54 and 55, the control units 11a and 12a, the signal input units 11b and 12b, the transmission units 11c and 12c, and the driver units 11d and 12d) are provided in the respective controllers 11 and 12, to enhance the redundancy.

### (6)

When the relays 13, 14, and 15 are in the first state (i.e. the first relay 13 and the third relay 15 are closed whereas the second relay 14 is open), that is, when the motor 50 is controlled by the first controller 11, the power supply to the driver unit 12d of the second controller 12 may be stopped. In the meanwhile, when the relays 13, 14, and 15 are switched to the second state (i.e. the first relay 13 and the third relay 15 are open whereas the second relay 14 is closed), the power supply to the driver unit 12d may be started.

According to this structure, when the motor 50 is controlled by the first controller 11, the power supply to the driver unit 12d which is unnecessary for monitoring the first controller 11 is not carried out. It is therefore possible to restrain the occurrence of a failure due to the degradation of the driver unit 12d.

### (7)

The railroad vehicle door control system 1 may be differently implemented as described below.

That is to say, in the railroad vehicle door control system 1, the operation of the second controller 12 may be changed as follows.

While the first controller 11 controls the motor 50, the second controller 12 obtains control information from the first controller 11 and from the other seven door controllers 10 connected to the local communication line 32 via the local communication line 32, and switches the control of the motor 50 or the like from the control by the first controller 11 to the control by the second controller 12 when (a) at least half of the control information of the first controller 11, the control information of the second controller 12, and the sets of control information of the other seven door controllers 10 (i.e. at least a half of 9 sets of control information in total) are identical with other another, (b) the control information of the first controller 11 is different from those identical sets of control information, and (c) the control information of the second controller 12 is identical with those identical sets of control information.

For example, when the control information of the first controller 11 is different from the control information of the second controller 12 whereas the control information of the second controller 12 is identical with the control information of the other four door controllers 10, the control of the motor 50 is switched to the control by the second controller 12.

According to this arrangement, since a determination as to whether there is a failure in the first system is made based on the control information of the first controller 11, the control information of the second controller 12, and the sets of control information of the other seven door controllers 10 (i.e. 9 sets of control information in total), it is possible to precisely detect a failure in the first system without requiring the addition of any device to the railroad vehicle door control system 1. That is to say, because it is possible to determine if there is a failure in the first system by using the control information of the other door controllers 10 and the control information of the second system, it is possible to determine the existence of a failure in the first system more precisely, as compared to the case where a determination as to whether there is a failure in the first system is made by using control information of another door controller 10 and the control information of the second system.

Furthermore, it is possible to precisely find a case where there is a failure in the first controller 11 but not in the second controller 12, by a simple comparison of control information. For this reason, it is possible to prevent the control of the motor 50 from being switched to the control by the second controller 12 which has a failure.

The preferred embodiment of the present invention has been described above. The present invention, however, is not limited to them and may be variously changed within the scope of claims .
(1) The door 101 may adopt a belt mechanism or a ball screw mechanism instead of the rack and pinion mechanism.
(2) A single communications terminal 31 may be provided not for each railroad vehicle 100 but for a plurality of railroad vehicles 100. In other words, a single local communication line 32 may extend across a plurality of vehicles.
(3) The time constant of a soft filter used when the second controller 12 receives various signals may be set so as to be longer than that of the first controller 11. This makes the second controller 12 less influenced by noises or the like, as compared to the first controller 11.
(4) The first controller 11 may be arranged as below to detect a failure of the same. It is noted that a similar arrangement is usable for allowing the second controller 12 to detect a failure in the same.

When the first controller 11 either (a1) has obtained a signal indicating the full-closed position and the locking state from the locking detection unit 61 and has not obtained a signal indicating that the door 101 is in the full-closed position from the full-closed position detection unit 62 or (a2) has not received a signal indicating the full-closed position and the locking state from the locking detection unit 61 and has been obtained a signal indicating the full-closed position from the full-closed position detection unit 62, the following determination is made.

The first controller 11 obtains the control information of the second controller 12. According to this control information, if in the second controller 12 the states of signal acquisition from the locking detection unit 61 and the full-closed position detection unit 62 are identical with those in the first controller 11, a failure in the locking detection unit 61 or the full-closed position detection unit 62 (i.e. a failure in the limit switch) is suspected. Therefore it is not possible to determine that there is a failure in the first controller 11, solely based on signals from the locking detection unit 61 and the full-closed position detection unit 62.

On the other hand, when in the second controller 12 the states of signal acquisition from the locking detection unit 61 and the full-closed position detection unit 62 are in the following (b1) or (b2), it is determined that there is a failure in the first system, i.e. a failure on a signal acquisition path in the first system.
(b1) A signal indicating the full-closed position and the locking state has been obtained from the locking detection unit 61 and a signal indicating that the door 101 is in the full-closed position has been obtained from the full-closed position detection unit 62.
(b2) A signal indicating the full-closed position and the locking state has not been obtained from the locking detection unit 61 and a signal indicating that the door 101 is in the full-closed position has not been obtained from the full-closed position detection unit 62.

According to the arrangement above, it is possible to easily detect a failure in the controllers 11 and 12 and also in the locking detection unit 61 and the full-closed position detection unit 62 by comparing the signals from the locking detection unit 61 and the full-closed position detection unit 62 between the first system and the second system.

### Industrial Applicability

The present invention may be used for controlling the opening and closing operations of a door for a railroad vehicle.

### Reference Signs List

- 1: RAILROAD VEHICLE DOOR CONTROL SYSTEM
- 10: DOOR CONTROLLER
- 11: FIRST CONTROLLER
- 12: SECOND CONTROLLER
- 13, 14, 15: RELAY
- 20: TRAIN INFORMATION CONTROLLER
- 30: COMMAND COMMUNICATION LINE
- 32: LOCAL COMMUNICATION LINE
- 40: SIGNAL LINE
- 50: MOTOR
- 54, 55: HALL EFFECT SENSOR (ENCODER)
- 100: RAILROAD VEHICLE
- 101: DOOR

## Claims

1. A railroad vehicle door control system comprising:
a plurality of door controllers (10) provided for respective doors (101) of a railroad vehicle (100) to control opening and closing of the doors (101) and a communication line (32) to which the door controllers (10) are connected, the doors (101) being opened or closed based on an instruction simultaneously transmitted from a driver stand to the door controllers (10),
wherein each of the door controllers (10) includes:
a motor (50) which opens or closes the associated door (101); **characterized in that** each of the door controllers includes
a first controller (11) and a second controller (12) which are able to control the motor (50) based on an instruction from the driver stand,
the second controller (12) obtaining control information from the first controller (11) and another door controller (10) of the aforesaid plurality via the communication line (32) while the first controller (11) is controlling the motor (50), and switching the control of the motor (50) from the control by the first controller (11) to the control by the second controller (12) when the control information of the first controller (11) is different from the control information of the second controller (12) and the control information of said another door controller (10).

2. The railroad vehicle door control system according to claim 1, wherein,
the first controller (11) is arranged to be able to detect a failure in the first controller (11), and to stop the control of the motor (50) and output failure information to the communication line (32) upon detection of a failure in the first controller (11), and
the second controller (12) switches the control of the motor (50) from the control by the first controller (11) to the control by the second controller (12), when receiving the failure information from the first controller (11) via the communication line (32).

3. The railroad vehicle door control system according to claim 1 or 2, wherein,
the second controller (12) is able to detect a failure in the second controller (12) and sends failure information to the first controller (11) upon detection of a failure in the second controller (12), and
the first controller (11) outputs the failure information to the communication line (32) when receiving the failure information from the second controller (12).

4. The railroad vehicle door control system according to any one of claims 1 to 3, wherein,
each of the door controllers (10) includes:
a first output line relay (13) provided on an output line connecting the first controller (11) with the motor (50);
a second output line relay (14) provided on an output line connecting the second controller (12) with the motor (50) ; and
a feeder line relay (15) provided on a feeder line through which power is supplied from a power source to the first controller (11), and
the second controller (12) opens the feeder line relay (15) and the first output line relay (13) and closes the second output line relay (14), when receiving the failure information from the first controller (11).

5. The railroad vehicle door control system according to any one of claims 1 to 4, wherein,
the motor (50) is provided with a first encoder (54) outputting a detection result to the first controller (11) and a second encoder (55) outputting a detection result to the second controller (12), and
each of the first controller (11) and the second controller (12) includes a control unit (11a, 12a) having a CPU, an information input/output electric circuit (11c, 12c) which is able to output information from the control unit (11a, 12a) to the communication line (32) and to input information from the communication line (32) to the control unit (11a, 12a), and a motor output electric circuit (11d, 12d) which is used for supplying electric power to the motor (50).

6. The railroad vehicle door control system according to claim 5, wherein,
when the first controller (11) is controlling the motor (50), no power is supplied to the motor output electric circuit (12d) of the second controller (12).

7. A railroad vehicle door control system comprising:
a plurality of door controllers (10) provided for respective doors (101) of a railroad vehicle (100) to control opening and closing of the doors (101) and a communication line (32) to which the door controllers (10) are connected,
wherein each of the door controllers (10) comprises:
a motor (50) which opens or closes the associated door (101); **characterized in that** each of the door controllers includes
a first controller (11) and a second controller (12) which are able to control the motor (50) based on an instruction which is simultaneously transmitted from a driver stand to the plurality of door controllers (10) via the communication line (32),
the second controller (12) obtaining control information from the first controller (11) and from other door controllers (10) via the communication line (32) while the first controller (11) is controlling the motor (50), and switching the control of the motor (50) from the control by the first controller (11) to the control by the second controller (12) based on the control information of the first controller (11), the control information of the second controller (12), and the sets of control information of said other door controllers (10).

8. The railroad vehicle door control system according to claim 7, wherein,
the second controller (12) obtains the control information from the first controller (11) and said other door controllers (10) while the first controller (11) is controlling the motor (50), and the control of the motor (50) is switched from the control by the first controller (11) to the control by the second controller (12) if:
(a) at least a half of the control information of the first controller (11), the control information of the second controller (12), and the sets of control information of said other door controllers (10) are identical with one another,
(b) the identical sets of control information are different from the control information of the first controller (11), and
(c) the identical sets of control information are identical with the control information of the second controller (12) .

## Patentansprüche

1. Schienenfahrzeug-Türsteuerungssystem, umfassend:
eine Mehrzahl von Türsteuergeräten (10), die für jeweilige Türen (101) eines Schienenfahrzeugs (100) vorgesehen sind, um das Öffnen und Schließen der Türen (101) zu steuern, und eine Kommunikationsleitung (32), mit welcher die Türsteuergeräte (10) verbunden sind, wobei die Türen (101) auf Grundlage einer Anweisung, die simultan von einem Führerstand an die Türsteuergeräte (10) übertragen wird, geöffnet oder geschlossen werden,
wobei jedes der Türsteuergeräte (10) beinhaltet:
einen Motor (50), der die ihm zugeordnete Tür (101) öffnet oder schließt,
**dadurch gekennzeichnet, dass** jedes der Türsteuergeräte beinhaltet
ein erstes Steuergerät (11) und ein zweites Steuergerät (12), die in der Lage sind, den Motor (50) auf Grundlage einer Anweisung von dem Führerstand zu steuern,
wobei das zweite Steuergerät (12) Steuerinformationen von dem ersten Steuergerät (11) und einem weiteren Türsteuergerät (10) der genannten Mehrzahl über die Kommunikationsleitung (32) erhält, während das erste Steuergerät (11) den Motor (50) steuert, und die Steuerung des Motors (50) von der Steuerung durch das erste Steuergerät (11) auf die Steuerung durch das zweite Steuergerät (12) umschaltet, wenn die Steuerinformationen des ersten Steuergeräts (11) sich von den Steuerinformationen des zweiten Steuergeräts (12) und den Steuerinformationen des weiteren Türsteuergeräts (10) unterscheiden.

2. Schienenfahrzeug-Türsteuerungssystem nach Anspruch 1, wobei
das erste Steuergerät (11) dazu angeordnet ist, in der Lage zu sein, einen Fehler in dem ersten Steuergerät (11) zu erfassen, und nach Erfassen eines Fehlers in dem ersten Steuergerät (11) die Steuerung des Motors (50) zu stoppen und Fehlerinformationen an die Kommunikationsleitung (32) auszugeben, und
das zweite Steuergerät (12) die Steuerung des Motors (50) von der Steuerung durch das erste Steuergerät (11) auf die Steuerung durch das zweite Steuergerät (12) umschaltet, wenn es die Fehlerinformationen von dem ersten Steuergerät (11) über die Kommunikationsleitung (32) empfängt.

3. Schienenfahrzeug-Türsteuerungssystem nach Anspruch 1 oder 2, wobei
das zweite Steuergerät (12) in der Lage ist, einen Fehler in dem zweiten Steuergerät (12) zu erfassen, und nach Erfassen eines Fehlers in dem zweiten Steuergerät (12) Fehlerinformationen an das erste Steuergerät (11) sendet, und
das erste Steuergerät (11) die Fehlerinformationen an die Kommunikationsleitung (32) ausgibt, wenn es die Fehlerinformationen von dem zweiten Steuergerät (12) empfängt.

4. Schienenfahrzeug-Türsteuerungssystem nach einem der Ansprüche 1 bis 3, wobei
jedes der Türsteuergeräte (10) beinhaltet:
ein erstes Ausgabeleitungs-Relais (13), das an einer Ausgabeleitung vorgesehen ist, die das erste Steuergerät (11) mit dem Motor (50) verbindet,
ein zweites Ausgabeleitungs-Relais (14), das an einer Ausgabeleitung vorgesehen ist, die das zweite Steuergerät (12) mit dem Motor (50) verbindet, und
ein Versorgungsleitung-Relais (15), das an einer Versorgungsleitung vorgesehen ist, durch welche Leistung von einer Leistungsquelle dem ersten Steuergerät (11) zugeführt wird, und
das zweite Steuergerät (12) das Versorgungsleitungs-Relais (15) und das erste Ausgabeleitungs-Relais (13) öffnet und das zweite Ausgabeleitungs-Relais (14) schließt, wenn es die Fehlerinformationen von dem ersten Steuergerät (11) empfängt.

5. Schienenfahrzeug-Türsteuerungssystem nach einem der Ansprüche 1 bis 4, wobei
der Motor (50) mit einem ersten Kodierer (54) versehen ist, der ein Erfassungsergebnis an das erste Steuergerät (11) ausgibt, und einem zweiten Kodierer (55), der ein Erfassungsergebnis an das zweite Steuergerät (12) ausgibt, und
jedes von dem ersten Steuergerät (11) und dem zweiten Steuergerät (12) eine Steuereinheit (11a, 12a) beinhaltet, die eine CPU, einen elektrischen Informations-Eingabe-/Ausgabekreis (11c, 12c), der in der Lage ist, Informationen von der Steuereinheit (11a, 12a) an die Kommunikationsleitung (32) auszugeben und Informationen von der Kommunikationsleitung (32) in die Steuereinheit (11a, 12a) einzugeben, und einen elektrischen Motorausgabekreis (11d, 12d) aufweist, der verwendet wird, um elektrische Leistung dem Motor (50) zuzuführen.

6. Schienenfahrzeug-Türsteuerungssystem nach Anspruch 5, wobei
wenn das erste Steuergerät (11) den Motor (50) steuert, keine Leistung dem elektrischen Motorausgabekreis (12d) des zweiten Steuergeräts (12) zugeführt wird.

7. Schienenfahrzeug-Türsteuerungssystem, umfassend:
eine Mehrzahl von Türsteuergeräten (10), die für jeweilige Türen (101) eines Schienenfahrzeugs (100) vorgesehen sind, um das Öffnen und Schließen der Türen (101) zu steuern, und eine Kommunikationsleitung (32), mit welcher die Türsteuergeräte (10) verbunden sind,
wobei jedes der Türsteuergeräte (10) umfasst:
einen Motor (50), der die ihm zugeordnete Tür (101) öffnet oder schließt,
**dadurch gekennzeichnet, dass** jedes der Türsteuergeräte beinhaltet
ein erstes Steuergerät (11) und ein zweites Steuergerät (12), die in der Lage sind, den Motor (50) auf Grundlage einer Anweisung zu steuern, die simultan von einem Führerstand über die Kommunikationsleitung (32) an die Mehrzahl von Türsteuergeräten (10) übertragen wird,
wobei das zweite Steuergerät (12) Steuerinformationen von dem ersten Steuergerät (11) und von weiteren Türsteuergeräten (10) über die Kommunikationsleitung (32) erhält, während das erste Steuergerät (11) den Motor (50) steuert, und die Steuerung des Motors (50) auf Grundlage der Steuerinformationen des ersten Steuergeräts (11), der Steuerinformationen des zweiten Steuergeräts (12) und den Sätzen von Steuerinformationen der weiteren Türsteuergeräte (10) von der Steuerung durch das erste Steuergerät (11) auf die Steuerung durch das zweite Steuergerät (12) umschaltet.

8. Schienenfahrzeug-Türsteuerungssystem nach Anspruch 7, wobei
das zweite Steuergerät (12) die Steuerinformationen von dem ersten Steuergerät (11) und den weiteren Türsteuergeräten (10) erhält, während das erste Steuergerät (11) den Motor (50) steuert, und die Steuerung des Motors (50) von der Steuerung durch das erste Steuergerät (11) auf die Steuerung durch das zweite Steuergerät (12) umgeschaltet wird, wenn:
(a) zumindest eine Hälfte der Steuerinformationen des ersten Steuergeräts (11), der Steuerinformationen des zweiten Steuergeräts (12) und der Sätze von Steuerinformationen der weiteren Türsteuergeräte (10) miteinander identisch sind,
(b) die identischen Sätze von Steuerinformationen sich von den Steuerinformationen des ersten Steuergeräts (11) unterscheiden, und
(c) die identischen Sätze von Steuerinformationen identisch mit den Steuerinformationen des zweiten Steuergeräts (12) sind.

## Revendications

1. Système de commande de portes de véhicule ferroviaire comprenant :
une pluralité de dispositifs de commande de portes (10) prévus pour des portes (101) respectives d'un véhicule ferroviaire (100) pour commander l'ouverture et la fermeture des portes (101), et une ligne de communication (32) à laquelle les dispositifs de commande de portes (10) sont connectés, les portes (101) s'ouvrant ou se fermant sur la base d'une instruction transmise simultanément aux dispositifs de commande de portes (10) à partir d'un poste de conducteur,
dans lequel chacun des dispositifs de commande de portes (10) comporte :
un moteur (50) qui ouvre ou qui ferme la porte (101) associée ; **caractérisé en ce que** chacun des dispositifs de commande de portes comporte
un premier dispositif de commande (11) et un deuxième dispositif de commande (12) qui sont capables de commander le moteur (50) sur la base d'une instruction provenant du poste de conducteur,
le deuxième dispositif de commande (12) obtenant des informations de commande par le premier dispositif de commande (11) et par un autre dispositif de commande de porte (10) de la pluralité susmentionnée via la ligne de communication (32) tandis que le premier dispositif de commande (11) commande le moteur (50), et commutant la commande du moteur (50) de la commande par le premier dispositif de commande (11) à la commande par le deuxième dispositif de commande (12) lorsque les informations de commande du premier dispositif de commande (11) sont différentes des informations de commande du deuxième dispositif de commande (12) et des informations de commande dudit autre dispositif de commande de porte (10).

2. Système de commande de portes de véhicule ferroviaire selon la revendication 1, dans lequel,
le premier dispositif de commande (11) est agencé de manière à être capable de détecter une défaillance dans le premier dispositif de commande (11), et pour arrêter la commande du moteur (50) et délivrer des informations de défaillance à la ligne de communication (32) dès la détection d'une défaillance dans le premier dispositif de commande (11), et
le deuxième dispositif de commande (12) commute la commande du moteur (50) de la commande par le premier dispositif de commande (11) à la commande par le deuxième dispositif de commande (12), à la réception des informations de défaillance à partir du premier dispositif de commande (11) via la ligne de communication (32).

3. Système de commande de portes de véhicule ferroviaire selon la revendication 1 ou 2, dans lequel,
le deuxième dispositif de commande (12) est capable de détecter une défaillance dans le deuxième dispositif de commande (12) et envoie des informations de défaillance au premier dispositif de commande (11) dès la détection d'une défaillance dans le deuxième dispositif de commande (12), et
le premier dispositif de commande (11) délivre les informations de défaillance à la ligne de communication (32) à la réception des informations de défaillance à partir du deuxième dispositif de commande (12).

4. Système de commande de portes de véhicule ferroviaire selon l'une des revendications 1 à 3, dans lequel,
chacun des dispositifs de commande de portes (10) comporte :
un premier relais de ligne de sortie (13) prévu sur une ligne de sortie connectant le premier dispositif de commande (11) au moteur (50) ;
un deuxième relais de ligne de sortie (14) prévu sur une ligne de sortie connectant le deuxième dispositif de commande (12) au moteur (50) ; et
un relais de ligne d'alimentation (15) prévu sur une ligne d'alimentation par laquelle l'énergie est fournie au premier dispositif de commande (11) à partir d'une source d'énergie, et
le deuxième dispositif de commande (12) ouvre le relais de ligne d'alimentation (15) et le premier relais de ligne de sortie (13), et ferme le deuxième relais de ligne de sortie (14), à la réception des informations de défaillance à partir du premier dispositif de commande (11).

5. Système de commande de portes de véhicule ferroviaire selon l'une des revendications 1 à 4, dans lequel,
le moteur (50) est pourvu d'un premier codeur (54) qui délivre un résultat de détection au premier dispositif de commande (11), et d'un deuxième codeur (55) qui délivre un résultat de détection au deuxième dispositif de commande (12), et
chacun parmi le premier dispositif de commande (11) et le deuxième dispositif de commande (12) comporte une unité de commande (11a, 12a) disposant d'une unité centrale de traitement, d'un circuit électrique d'entrée/sortie d'informations (11c, 12c) qui est capable de délivrer des informations provenant de l'unité de commande (11a, 12a) à la ligne de communication (32), et d'entrer des informations provenant de la ligne de communication (32) à l'unité de commande (11a, 12a), et un circuit électrique de sortie de moteur (11d, 12d) qui est utilisé pour fournir de l'énergie électrique au moteur (50).

6. Système de commande de portes de véhicule ferroviaire selon la revendication 5, dans lequel,
lorsque le premier dispositif de commande (11) commande le moteur (50), aucune énergie n'est fournie au circuit électrique de sortie de moteur (12d) du deuxième dispositif de commande (12).

7. Système de commande de portes de véhicule ferroviaire comprenant :
une pluralité de dispositifs de commande de portes (10) prévus pour des portes (101) respectives d'un véhicule ferroviaire (100) pour commander l'ouverture et la fermeture des portes (101), et une ligne de communication (32) à laquelle les dispositifs de commande de portes (10) sont connectés,
dans lequel
chacun des dispositifs de commande de portes (10) comprend :
un moteur (50) qui ouvre ou qui ferme la porte (101) associée ; **caractérisé en ce que** chacun des dispositifs de commande de portes comporte
un premier dispositif de commande (11) et un deuxième dispositif de commande (12) qui sont capables de commander le moteur (50) sur la base d'une instruction qui est transmise simultanément depuis un poste de conducteur à la pluralité de dispositifs de commande de portes (10) via la ligne de communication (32),
le deuxième dispositif de commande (12) obtenant des informations de commande par le premier dispositif de commande (11) et par d'autres dispositifs de commande de portes (10) via la ligne de communication (32) tandis que le premier dispositif de commande (11) commande le moteur (50), et commutant la commande du moteur (50) de la commande par le premier dispositif de commande (11) à la commande par le deuxième dispositif de commande (12) sur la base des informations de commande du premier dispositif de commande (11), des informations de commande du deuxième dispositif de commande (12), et des ensembles d'informations de commande desdits autres dispositifs de commande de portes (10).

8. Système de commande de portes de véhicule ferroviaire selon la revendication 7, dans lequel,
le deuxième dispositif de commande (12) obtient les informations de commande par le premier dispositif de commande (11) et par lesdits autres dispositifs de commande de portes (10) tandis que le premier dispositif de commande (11) commande le moteur (50), et la commande du moteur (50) est commutée de la commande par le premier dispositif de commande (11) à la commande par le deuxième dispositif de commande (12) si :
(a) au moins une moitié des informations de commande du premier dispositif de commande (11), des informations de commande du deuxième dispositif de commande (12), et des ensembles d'informations de commande desdits autres dispositifs de commande de portes (10) sont identiques les uns aux autres,
(b) les informations identiques de l'ensemble d'informations de commande sont différentes des informations de commande du premier dispositif de commande (11), et
(c) les informations identiques de l'ensemble d'informations de commande sont identiques aux informations de commande du deuxième dispositif de commande (12).
